# EUROPÄISCHE PATENTSCHRIFT

(11) **EP 0 706 494 B1**
(45) Veröffentlichungstag und Bekanntmachung des Hinweises auf die Patenterteilung: **04.03.1998**
(21) Anmeldenummer: 95919391.3
(22) Anmeldetag: 04.05.1995
(51) Int. Cl.: B65G 47/76

(54) **SCHWENKFLÜGELWEICHE**
SWIVELLING-DEFLECTOR SWITCHING DEVICE
DISPOSITIF D'AIGUILLAGE A DEFLECTEUR PIVOTANT

(30) Priorität: 05.05.1994 DE 4415788
(43) Veröffentlichungstag der Anmeldung: 17.04.1996
(73) Patentinhaber: SIEMENS AKTIENGESELLSCHAFT, 80333 München (DE)
(72) Erfinder: MALOW, Siegmar, D-78465 Dettingen (DE)
(86) Internationale Anmeldenummer: EP9501690
(87) Internationale Veröffentlichungsnummer: WO9530614

(56) Entgegenhaltungen:
- CA-A- 1 257 557
- US-A- 3 465 870

## Beschreibung

Die Erfindung bezieht sich auf eine Weichenvorrichtung mit einem Schwenkflügel zum Ausschleusen von Fördergut aus einem in mindestens zwei Ausschleusungskanäle.

Aus der DE-A-41 03 849 ist eine Ausschwenkvorrichtung bekannt, die einen schnellen anschlagfreien Schwenkvorgang ermöglicht, ohne daß Dämpfungsanschläge am Ende der Schwenkbewegung erforderlich sind. Diese Vorrichtung weist ein Koppeldreieck auf, bei dem zwei Eckpunkte an den Kolbenstangen von Betätigungszylindern angeordnet sind, wobei die Gehäuse der Betätigungszylinder die Fixpunkte für die Schwenkbewegung des Koppeldreiecks bilden. Eine Dämpfung beim Verschwenken wird über die Verwendung von pneumatischen Zylindern erhalten.

Weiterhin ist aus der US-A-3 465 870 eine Weiche für Transportsysteme bekannt geworden, bei der der Weichenflügel in einem Schwenklager gelagert ist. Eine Auslenkung des Weichenflügels und ein Rückschwenken in seine Endstellungen wird über einen gesteuerten Pneumatikzylinder erreicht. Zur Vermeidung einer Zerstörung empfindlicher Güter bei der Ausschleusung ist zusätzlich ein blattfederartiges Element verschieblich mit dem Schwenkflügel verbunden. Dadurch ergibt sich stets ein weicher Übergang bei der Richtungsänderung der Güter.
Die Pneumatikzylinder müssen die Vor- und Rückbewegung des Weichenflügels erzeugen.

Aufgabe der vorliegenden Erfindung ist es, eine Weichenvorrichtung mit einem Schwenkflügel zum ungehinderten Auslenken von Transportgütern zu schaffen, die eine schnelle gedämpfte Schwenkbewegung des Schwenkflügels ermöglicht, ohne daß Dämpfungsanschläge am Ende der Schwenkbewegung erforderlich sind und bei der keine Antriebsvorrichtung für die Rückstellung des Weichenflügels notwendig ist.

Die erfindungsgemäße Lösung ist in den Merkmalen des Anspruchs 1 angegeben.

Weitere vorteilhafte Ausführungsformen der Erfindung sind den Unteransprüchen und der Beschreibung sowie den beiliegenden Zeichnungen zu entnehmen.

Besonders vorteilhaft bei der Erfindung ist, daß eine spielfreie, biege- und torsionssteife Schwenklagerung des Schwenkflügels erreicht wird, auf eine Art und Weise, durch die ein lagergebundener Aufbau von Rückstellkräften bei beidseitiger Verdrehung des Schwenkflügels aus der Mittelstellung heraus erfolgt. Insbesondere ist hervorzuheben, daß damit eine Integration der Funktionen "Lagerung" und "Aufbau von Rückstellkräften" möglich geworden ist.

Um eine ungehinderte Bewegung der Blattfeder über einen ausreichend großen Bereich zu ermöglichen, sowie die Eigenfrequenz des Systems einzustellen, ist innerhalb des Lagerblocks eine sich entlang eines Bereichs der Blatffeder erstreckende Ausnehmung vorgesehen, innerhalb der die Blatffeder bei der Schwenkbewegung frei bewegbar ist.

Vorteilhaft erfolgt die Krafteinleitung für die Ausführung einer Schwenkbewegung durch ein fest am Schwenkflügel angeordnetes Befestigungselement, das mit der Kolbenstange eines Bewegungszylinders verbunden ist.
Eine flexible kinetische Dimensionierung der Weiche wird vorteilhaft durch stellenweise ausgestanzte Bereiche der Blattfeder erreicht.

Eine besonders einfache Befestigung der Blattfeder am Schwenkflügel und im Lagerblock erfolgt dadurch, daß die Blattfeder jeweils in einen Schlitz eingespannt wird.
Die Weichenvorrichtung kann vorteilhaft bei einer Fördervorrichtung zum Ausschleusen von Transportgut aus einem Förderkanal oder bei einer Rutschenvorrichtung zur Ausschleusung von Transportgut in einen von zwei Ausschleusungskanälen eingesetzt werden.

Ein Ausführungsbeispiel der Erfindung ist nachfolgend anhand von Zeichnungen beschrieben:
- Figur 1: zeigt eine Seitenansicht einer erfindungsgemäßen Weichenvorrichtung,
- Figur 2: zeigt eine Untenansicht einer erfindungsgemäßen Weichenvorrichtung.

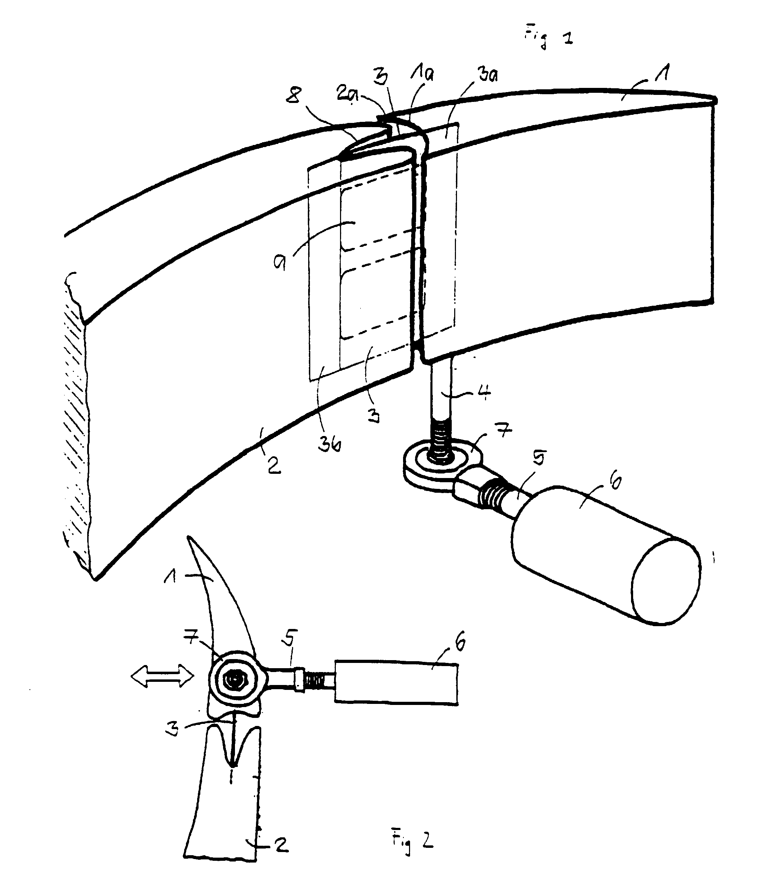

In Figur 1 ist mit 1 ein Schwenflügel bezeichnet, der an einem Lagerblock 2 angebracht ist. Als Lagerung ist eine Blattfeder 3 vorgesehen, die mit einer ersten Seite 3a an dem Schwenkflügel befestig ist und mit einer zweiten Seite, die der ersten Seite gegenüber liegt, am Lagerblock befestigt ist. Die Krafteinleitung zur Ausführung der Schwenkbewegung erfolgt direkt in den Schwenkflügel. Dies kann insbesondere dadurch geschehen, daß ein am Schwenkflügel fest angebrachtes Befestigungselement 4 mit der Kolbenstange 5 eines Bewegungszylinders 6 verbunden ist. Beispielsweise kann des Befestigungselement 4 im wesentlichen zapfenförmig ausgeführt sein. Zur Verbindung ist ein Gelenkkopf 7 vorgesehen.

Die Blattfeder 3 kann zur flexibleren Dimensionierung stellenweise ausgestanzte Bereiche 9 aufweisen.

Im allgemeinen wirkt die Weichenvorrichtung zusammen mit einem oder mehreren Förder- oder Ausschleusungskanälen, die in den Zeichnungen jedoch nicht dargestellt sind. Zur Anpassung an diese Kanäle und darüberhinaus auch an die Kinematik und Dynamik des Ausschleusungsvorgangs weist die Oberfläche des Schwenkflügels eine vorgegebene Krümmung auf, die sich in Gegenrichtung zum Lagerblock verjüngt.

Der Lagerblock kann in hornartiger Form ausgeführt sein, z.B. als Mittelhorn einer Rutsche mit zwei Ausschleusungskanälen.

Um eine ungehinderte Bewegung des Schwenflügels gegenüber dem Lagerblock zu ermöglichen, weisen Schwenkflügel und Lagerblock einander zugeordnete konvexe bzw. konkave Verbindungsbereiche 1a, 2a im Ansatzbereich der Schwenkbewegung auf.

Die Blattfeder kann am Lagerblock und am Schwenkflügel auf verschiedene Weise befestigt sein. Sie kann insbesondere jeweils verschraubt, verbolzt oder vergossen sein. Besonders vorteilhaft ist die Einspannung der Blattfeder in einen Schlitz im Schwenkflügel bzw. im Lagerblock.

Um die Eigenfrequenz des aus Blattfeder und Schwenkflügel bestehenden Schwingungssystems zu variieren und entsprechend den praktischen Bedürfnissen der Anwendung einzustellen, ist eine durch entlang eines Bereichs der Blattfeder 3 erstreckende Ausnehmung 8 im Lagerblock 2 vorgesehen, innerhalb der die Blattfeder 3 bei der Schwenkbewegung frei bewegbar ist. Diese Ausnehmung ist der Amplitude der durch den Bewegungszylinder in dem System eingeprägten Bewegung angepaßt.

Durch eine Bewegung der Kolbenstange 5, im wesentlichen parallel zur Achse des Bewegungszylinders 6, wird dem Schwenkflügel 1 eine Schwenkbewegung aufgezwungen. Dabei entstehen entsprechend der Auslenkung der Blattfeder von der Gleichgewichtslage verzögernde Rückstellkräfte. Die erreichbare Umschaltzeit der Weiche wird im wesentlichen durch die Masse des Weichenflügels, die Federkraft, die Kraft des Bewegungszylinders, sowie Geometriefaktoren, insbesondere der linearen Ausbildung des frei bewegbaren Blattfederbereichs bestimmt und einstellbar.

Bei einer Fördervorrichtung mit einer Weiche zum Ausschleusen von Transportgut aus einem Förderkanal wird vorteilhaft eine erfindungsgemäße Weiche eingesetzt. Dabei wird zum Ausschleusen der Schwenkflügel in den Förderkanal geschwenkt, so daß das Transportgut abgelenkt wird und aus dem Förderkanal hinausbewegt wird.

Die erfindungsgemäße Weichenvorrichtung kann weiter bei einer Rutschenvorrichtung mit einem Eingangsbereich von einer Weiche zur Ausschleusung von Transportgut in einen von zwei Ausschleusungskanälen eingesetzt werden. Dabei wird der Lagerblock als Mittelhorn, das die beiden Austauschkanäle trennt, ausgebildet.

Die Krafteinleitung für die Schwenkbewegung des Schwenkflügels kann auch derart geschehen, daß der Schwenkflügel elektrischen oder magnetischen Feldern in geeigneter Weise ausgesetzt wird.

## Patentansprüche

1. Weichenvorrichtung mit einem Schwenkflügel (1) zum Ausschleusen von Fördergut aus einem in mindestens zwei Ausschleusungskanäle, wobei der Schwenkflügel (1) an dem freien Ende einer in einem Lagerblock (2) eingespannten Blatffeder (3) gelagert ist, wobei die Krafteinleitung in den Schwenkflügel erfolgt, die Oberfläche des Schwenkflügels (1) eine vorgegebene Krümmung aufweist und sich der Querschnitt des Schwenkflügels in Gegenrichtung zum Lagerblock (2) verjüngt, wobei der Lagerblock (2) eine hornartige Form aufweist, der Lagerblock (2) und der Schwenkflügel (1) einander zugeordnete konvexe bzw. konkave Verbindungsbereiche (1a, 2a) im Lagerbereich der Blattfeder (3) aufweisen, und wobei der Lagerblock (2) eine sich entlang eines Bereichs der Blattfeder (3) erstreckende Ausnehmung (8) aufweist, innerhalb der die Blattfeder (3) bei der Schwenkbewegung frei bewegbar ist.

2. Vorrichtung nach Anspruch 1, bei der für die Krafteinleitung ein am Schwenkflügel (1) angebrachtes Befestigungselement (4) vorgesehen ist, das mit der Kolbenstange eines Bewegungszylinders (6) verbunden ist.

3. Vorrichtung nach Anspruch 1, bei der die Blattfeder (3) stellenweise ausgestanzte Bereiche (9) aufweist.

4. Vorrichtung nach Ansprüchen 1 und 3, bei der die Blattfeder (3) mit der ersten und zweiten Seite ((3a, 3b) jeweils in einen Schlitz im Schwenkflügel (1) und im Lagerblock (2) eingespannt ist.

## Claims

1. Switching device having a swivelling deflector (1) for segregating conveyed products from one into at least two segregation channels, the swivelling deflector (1) being mounted at the free end of a leaf spring (3) braced in a bearing block (2), the introduction of force being effected into the swivelling deflector, the surface of the swivelling deflector (1) having a predetermined curvature, and the cross-section of the swivelling deflector tapering in the opposite direction to the bearing block (2), the bearing block (2) having a horn-like shape, the bearing block (2) and the swivelling deflector having mutually assigned convex and concave connecting regions (1a, 2a) in the bearing region of the leaf spring (3), and the bearing block (2) having a recess (8) which extends along one region of the leaf spring (3) and within which the leaf spring (3) is freely movable during the swivelling movement.

2. Device according to Claim 1, in which a fixing element (4) attached to the swivelling deflector (1) is provided for the purpose of introducing the force and is connected to the piston rod of a movement cylinder (6).

3. Device according to Claim 1, in which the leaf spring (3) has regions (9) which are punched out at certain points.

4. Device according to Claims 1 and 3, in which the first and second sides (3a, 3b) of the leaf spring (3) are braced in a slot in the swivelling deflector (1) and in the bearing block (2) respectively.

## Revendications

1. Dispositif d'aiguillage muni d'un déflecteur pivotant (1) en vue du tri compartimenté d'une matière convoyée, d'un canal de tri compartimenté, vers au moins deux canaux de ce type, dispositif dans lequel le déflecteur pivotant (1) est monté à l'extrémité libre d'une lame de ressort (3) encastrée dans un bloc d'appui (2) ; dans lequel l'application de force a lieu dans le déflecteur pivotant, la face supérieure du déflecteur pivotant (1) présente une courbure préétablie, et la section transversale du déflecteur pivotant s'amenuise dans la direction opposée au bloc d'appui (2) ; dans lequel le bloc d'appui (2) revêt une forme du type corne, le bloc d'appui (2) et le déflecteur pivotant (1) présentent, dans la zone de montage de la lame de ressort (3), des régions de rattachement (1a, 2a) respectivement concave et convexe, associées l'une à l'autre ; et dans lequel le bloc d'appui (2) comporte un évidement (8) qui s'étend le long d'une région de la lame de ressort (3), et à l'intérieur duquel ladite lame de ressort (3) jouit d'une libre mobilité au cours du mouvement pivotant.

2. Dispositif selon la revendication 1, dans lequel il est prévu, pour l'application de force, un élément de fixation (4) monté sur le déflecteur pivotant (1) et relié à la tige du piston d'un vérin moteur (6).

3. Dispositif selon la revendication 1, dans lequel la lame de ressort (3) présente, par zones, des régions (9) découpées.

4. Dispositif selon les revendications 1 et 3, dans lequel la lame de ressort (3) est encastrée, par les premier et second côtés (3a, 3b), dans une fente respectivement pratiquée dans le déflecteur pivotant (1) et dans le bloc d'appui (2).
